# EUROPEAN PATENT SPECIFICATION

(11) **EP 1 326 458 B1**
(45) Date of publication and mention of the grant of the patent: **22.02.2006**
(21) Application number: 01203820.4
(22) Date of filing: 09.10.2001
(51) Int. Cl.: H04Q 7/34

(54) **System and method for checking parameter settings of radio networks**
System und Verfahren zur Überprüfung von Parametereinstellungen in Funknetzen
Système et procédé pour vérifier l'établissement de paramètres dans des réseaux radio

(43) Date of publication of application: 09.07.2003
(73) Proprietor: Koninklijke KPN N.V., 9726 AE Groningen (NL)
(72) Inventor: Oldenburg, Joannes Willem Maria, 2623 RB Delft (NL); Breurken, Hermann Petrus, 9617 EK Harkstede (NL); Arnold, Pierre, 3081 JG Rotterdam (NL); van Veenendaal, Gijsbert, 6717 PP Ede (NL)
(74) Representative: Wuyts, Koenraad Maria

(56) References cited:
- WO-A-92/21182
- DE-A- 19 813 754
- US-A- 6 085 335
- US-B1- 6 185 437
- HIRSCH L: "EINHEITLICHES VERFAHREN ZUR PLAUSIBILITAETSKONTROLLE DER KONFIGURATIONSAENDERUNGEN VON RADIOPARAMETERN IN EINEM MOBILFUNKNETZ" , TECHNIK REPORT, SIEMENS AG.,ERLANGEN, DE, VOL. 2, NR. 2, PAGE(S) 52-56 XP000828537 ISSN: 1436-7777 * the whole document *

## Description

### Field of the invention

The invention relates to a method and system for checking at least one modified parameter and/or value obtained from changing at least one operational parameter and/or value of an at least one component of a radio network. The invention further relates to a corresponding computer program.

### Background

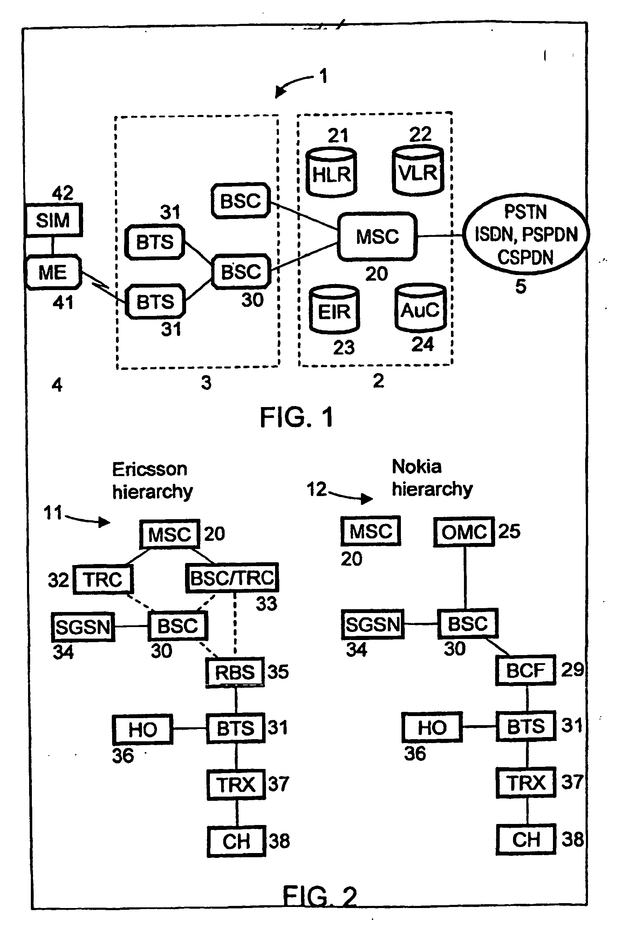

Fig. 1 shows a schematic representation of a contemporary cellular network 1. The architecture of these cellular networks comprises a network subsytem 2, a base station subsytem 3 and a mobile station 4. Examples of these cellular networks are GSM and DCS and extensions of these networks such as GPRS, UMTS etc. The network subsystems main component involves the mobile switching centre 20 (MSC) providing the interface of the cellular network and wire bound networks 5 (PSTN, ISDN, ADSL etc.) as well as roaming and call-routing facilities (Home Location Register 21, Visitor Location Register 22, Equipment Identity Register 23 and Authentication Centre 24).

The base station subsystem 3 consists of a number of base stations. The base station subsystem 3 constitutes the connection between a mobile station 4 and the MSC 20. The base station subsystem 3 may be distinguished into two parts, the Base Transceiver Station 31 (BTS) and the Base Station Controller 30 (BSC). The BTS 31 houses radio transceivers that define a cell and handles the radio-link protocols with the mobile station 4. In a large urban area, there will potentially be a large number of BTSs deployed. The BSC 30 manages the radio resources for one or more BTSs 31. It handles radio-channel set-up, frequency hopping, and handovers.

The mobile station 4 is the mobile equipment that enables a user to communicate with others through the cellular network. A mobile station 4 usually comprises mobile equipment 41 and a Subscriber Identity Module 42 (SIM).

As the complexity of cellular networks increases flexible operation of these networks becomes more difficult. Configuration and reconfiguration of a cellular network is complex since the parametersettings of the different components of the cellular radio network affect eachother. WO 92/21182 of Ericsson, which is considered the closest prior art, describes a reconfiguration method and apparatus in which the cell parameters of particular mobile switching centres in a network are copied to a database, and the copied parameters are stored. A set of proposed changes to the stored parameters are prepared and the consistency of the prepared set of proposed changes is verified. Alterations to the set of proposed changes responsive to the verification are made and the verified set of proposed changes are copied to the concerned mobile switching centres. The verified set of proposed changes is then introduced into the network. An up-to-date image of the cell parameters in the mobile switching centres in the network is maintained in a system parameter database.

### Problem definition and aims of the invention

Typically a cellular radio network comprises several MSC's and a larger number of base stations. Operation of such cellular radio networks requires a high degree of flexibility in the sense that configuration and reconfiguration of the cellular network has to be possible within a limited period of time and with a high degree of accuracy. Such a reconfiguration of a radio network can be permanent or temporarily. Reasons for such a reconfiguration are numerous, e.g. a temporary cell split needed to deal with an expected increase in traffic due to an event or the permanent integration of new elements both affecting the settings of already existing elements in the radio network. Therefore sophisticated methods and systems are required that administrate the parameter settings of the various components, e.g. the BTS or BSC, of the cellular radio network and change the parameter settings of said components. Examples of parameters that can be changed include cell type, cell designation, cell direction, signal strength, signal to noise ratio, etc. Moreover means have to be provided in order to check the consistency of the proposed parameter changes before the changes are implemented in the cellular network.

The reconfiguration method and system as revealed by WO 92/21182 can be improved with regard to, inter alia, the performed routine to check the consistency of proposed parameter changes.

More particularly an improvement relates to the hierarchical levels that can be checked. The method of WO 92/21182 checks the consistency of the proposed parameters only with regard to cells and handovers. Thus only a very limited part of the network hierarchy is checked, resulting in a less reliable and efficient control of the radio network.

Another problem of the method described in WO 92/21182 relates to the type of rules used in performing the consistency check. The rules used in performing this check originate solely from technical requirements derived from cellular network technology. There is no possibility to apply rules derived from operational practice as well. Moreover it is not possible to deviate from the technically sufficient parameter setting requirements if operational practice experience reveals a different more preferable technical parameter setting.

Still another problem of the method described in WO 92/21182 is that in performing the consistency check only pre-programmed rules are used. This limitation decreases the flexibility of the system for the operator that exploits a cellular radio network. It may be that such an operator is not satisfied with the requirements for the various parameters defined by the supplier of the network. The operator may want to define the requirements, including the technical requirements, himself.

The present invention aims to provide a method and system to check the consistency of the proposed changes of parameters.

US 6,085,335 discloses a self-engineering system to produce new parameters for a communication network on the basis of current operating data and parameters. A simulator is employed to verity the new parameters.

### Summary

The present invention provides a method and system that improve the reliability, flexibility and accuracy required for operating cellular radio networks.

It is an object of the invention to be able to verify the proposed changes in the parameter settings in all hierarchical levels of the radio network and of substantially every, i.e. any desired, relationship between parameters in the same or different hierarchical level of the radio network. By enabling verification on every hierarchical level the control and reliability of the network is significantly improved if changes in the parameter setting are to be implemented.

It is another object of the invention to enable the use of rules developed from operational practice in the verification of the parameter settings in one or more of the levels of the network hierarchy and relationship between elements in the cellular radio network. Hereafter the rules used to verify the parameter settings will be referred to as business rules. These business rules comprise rules related to technically preferable requirements as well as rules derived from operational practice.

It is still another object of the invention to enable the use of programmable rules in the verification of the proposed changes of the parameter settings in one or more hierarchical levels and relationship of elements in the radio system. These rules may preferably be programmed by the operator of the radio network or at least being ordered or influenced by the operator of the radio network. Moreover also the error messages if the rules are not obeyed may be operator-programmable.

These objects are achieved by providing the method, system and computer program according to the characterizing portions of claims 1, 22 and 26 respectively. This will be clarified in the description of the preterred embodiments.

### Short description of the drawings

Fig.1 shows an elementary representation of a GSM radionetwork;
Fig.2 shows examples of representations of different hierarchies the invention is able to handle;
Fig.3 shows a detailed scheme of the parameter management;
Fig. 4A, B shows a flow-chart illustrating an example of the business rule checking process;
Fig.5 shows a table of operational examples of business rules;
Fig.6A-B shows a few business rule modules.

### Description of preferred embodiments of the invention

For the purpose of teaching the invention, preferred embodiments of the method and devices of the invention are described in the sequel. It will be apparent to the person skilled in the art that other alternative and equivalent embodiments of the invention can be conceived and reduced to practice.

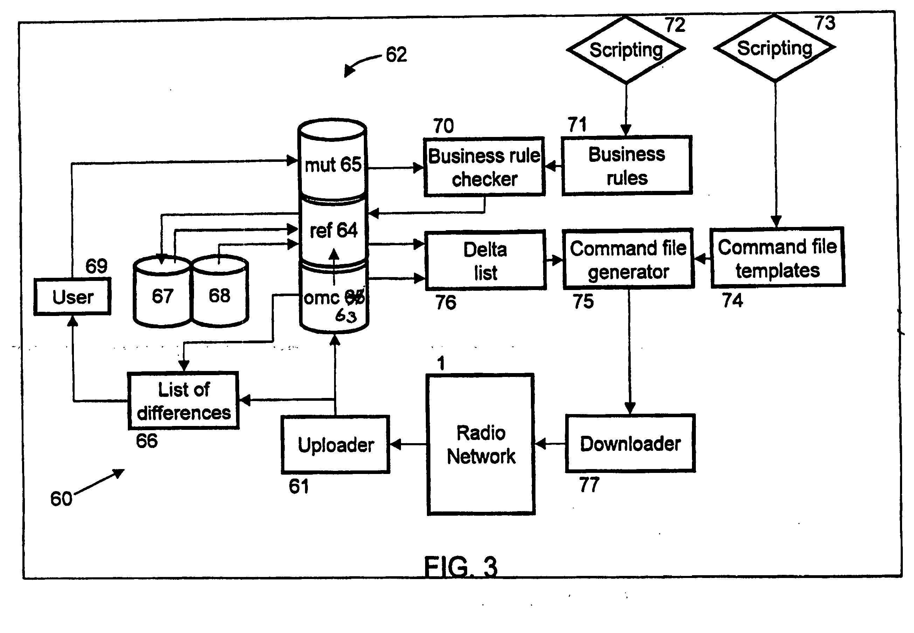

A radio network 1, as schematically shown in figure 1 may be represented alternatively by a network hierarchy 11,12 comprising different levels, see figure 2. These levels correspond to physical as well as non-physical parts of radio network 1. The hierarchies 11,12 may differ in their representation between several commercial suppliers of these kinds of radio networks 1. As an example figure 2 shows the network hierarchies of Ericsson 11 and Nokia 12 radio networks 1. It can be observed that the Ericsson and Nokia hierarchies 11 and 12 differ in some aspects, but are equivalent in other aspects.

The Ericsson hierarchy 11 comprises a MSC level 20. The MSC 20 is coupled to a transcoder 32 (TRC) and a BSC/TRC 33. The next level comprises the BSC 30. This BSC 30 may be linked to the TRC 32 or the BSC/TRC 33. In the case that a GPRS radio network should be represented an additional element Service GPRS Support Node 34 (SGSN) is introduced. The SGSN 34 may comprise different hierarchical levels itself. Next the Ericsson hierarchy 11 shows a Radio Base System 35 (RBS) level. The RBS may be linked to a BSC 30 or a BSC/TRC 33. Afterwards a handover 36 (HO) and the BTS 31 are shown. Finally the Ericsson hierarchy 11 exhibits a transceiver level 37 (TRX) and a channel level 38 (CH).

The Nokia hierarchy 12 differs from the Ericsson hierarchy in some aspects. Firstly the TRC 32 and BSC/TRC 33 level are replaced by an Operational Maintenance Centre 25 (OMC). Moreover whereas the Ericsson hierarchy 11 contains TRC and BSC/TRC levels, the Nokia hierarchy implements the OMC-level 25. The Ericsson hierarchy 11 and the Nokia hierarchy 12 are equivalent below the RBS 35 and the BCF 29 respectively.

It is noticed that the network hierarchies of Ericsson 11 and Nokia 12 are only examples. Other network suppliers might handle different network hierarchies. The method and system according to the invention are suited for these network hierarchies as well.

It is one of the objects of the invention to provide a method and system to handle the parameter settings in these kind of hierarchies. More specifically a method and system are provided to supply operators of cellular radio networks with a control facility on each and every hierarchical level and on relationships between elements of the radio network before changes in the parameter settings are implemented into the network.

Figure 3 shows an example of a process flow according to a preferred embodiment of the invention. The parameters and/or values uploaded from the radio network 1 may originate from each of the hierarchical levels shown in figure 2. E.g. in the case of the Nokia hierarchy 11 the parameters may be uploaded from the Nokia omc 25, whereas in case the Ericsson hierarchy 12 is applied parameters obtained from the Ericsson MSC 20 may be uploaded. The database 62 can be distinguished into three parts indicated as omc 63, ref 64 and mut 65. The omc part contains the operational parameters and values as set for the radio network. The ref part 64 contains the preferred new or changed parameters and values to be implemented in the radio network. The mut part 65 contains the parameters and values that are subject to a change proposal from user 69. A database with frequency plans 67 and a database with location data 68 can be present. A list of differences 66 can be generated containing the differences between the actual radio network and its representation in the omc part of the database. The user 69 handles the list of differences and can choose to change some parameter values. A system administrator may add or delete parameters. All these changes are made into the mut part 65 of the database 62. The mutated parameters are checked by the business rule checker 70 and put in the ref part 64 of the database 62 if the changed parameters obey the business rules applied to them or no business rule exists for the changed parameter or value. A delta list 76 is generated holding the values of the parameters that differ from the original values. These parameter values are implemented in the radio network 1 by means of a command file generator 75 and a downloader 77. Both the business rule modules and the command file are scripts as indicated by 72 and 73.

The method and system according to an aspect of the invention relate to the management and control of the various parameters in a cellular radio network. Therefore the various parameters and/or values can be stored in a database, indicated by 62 in figure 3. This database might be a commercially available database such as MS Access or Oracle. The method and system according to an aspect of the invention for storing the parameters and/or values uses a technique which will be referred to as the compressed row technique. One of the advantages of this technique is a simplification of manipulating data within a given database. Furthermore this technique limits the number of records to an acceptable level and new parameters may be added easily. Also differences between sets of parameters can be obtained quickly by comparison between the relevant strings instead of comparing individual parameters.

Basically the compressed row technique involves a convenient database which is linked to a descriptive database. Therefore a database applying compressed row techniques contains at least two separate parts. The first part may store the real data as strings, the second part may contain the descriptive information needed to process the real data from the first part. The second part will be referred to as the repository.

A preferable mechanism to apply the compressed row technique comprises the following steps. For every hierarchical level of the radio network 1 a parameter table is formed in the database 62. In this parameter table all the parameters of all elements in the radio network of that hierarchical level are stored. For each element the parameters are divided into parameter groups, each parameter group containing a string (compressed row) storing multiple parameters that may be divided by semi-coloms. Each group of parameters has a number assigned that indicates the nature of the group. Finally each group of parameters includes an identifier corresponding to the element. In the repository table for each parameter the group and the field within that group for that parameter is stored. To find the relevant element corresponding to an element identifier a hierarchy table is used. Various level-tables link the element identifiers to the parameter strings.

A simple example will clarify the mechanism described. Suppose that the value of the parameter BS_TX_PWR_MAX of base station 8662 (the maximum transmission power of that particular base station)is being sought. The hierarchy table HIERARCHY_OMC_BTS contains a base station with identifier 8662. Next it is deduced from the repository that the parameter being sought is e.g. located in parameter group 2 in field 9. The repository indicates moreover that the value on this location is expressed in dBm. The level table BTS_OMC then indicates that for this particular BTS a parameterstring for group 2 exists containing e.g. the string 1;8;1;4;1;8;1;1;0;15;1;0;0;2;0;0;0;0;;;;;. The 9^{th} value in this string is 0 which probably indicates that the BTS with identifier 8662 is not active.

The example above is a simplified case. There are values of parameters that can not be obtained in this direct way, but have to be obtained indirectly by means of a translate table. In that case the parameter has a translate identifier in the repository. By means of a field identifier, uniquely defining the parameter, the value of the parameter can be obtained from the translate table.

The business rule checker 70 performs a control function before parameters and/or values are implemented in the cellular radio network. In most cases there is a inter-dependency of the various parameters and values of parameters and therefore checking of new and modulated parameters and values before implementation in the network is preferable. However not only the bare technical sufficient requirements set for the various parameters should be checked. Since contemporary cellular radio networks have reached an considerable amount of complexity several other non-technical requirements as e.g. administrative data should preferably be checked as well. As .e.g. the operators administration indicates all cells for 900 MHz GSM with a cell_id starting with #1 and all cells for 1800 MHz DCS with cell_id starting with #6, these requirements should be part of the business rule check as well before configuration or reconfiguration of the network takes place.

Moreover it is preferable that the bare technical sufficient requirements can be altered according to rules obtained from daily operational use of the radio network. It can e.g. be technically sufficient to have a channel distance of 20 Hz between different cells. All channel distances above this value then will pass the bcc/bcch consistency check. However, in practice it may be that a channel difference of 50 Hz between the cells guarantees a more reliable operation. In that case, according to the invention, it is possible to use the preferred channel distance of 50 Hz as obtained from the operational practice as a business rule instead of the technically sufficient channel distance. Such a technical requirement will hereinafter referred to as a preferred technical requirement.

The business rule checker 70 can use the hierarchy tables from the repository part of the database 62. The business rules may be formulated by the user and implemented as a script.

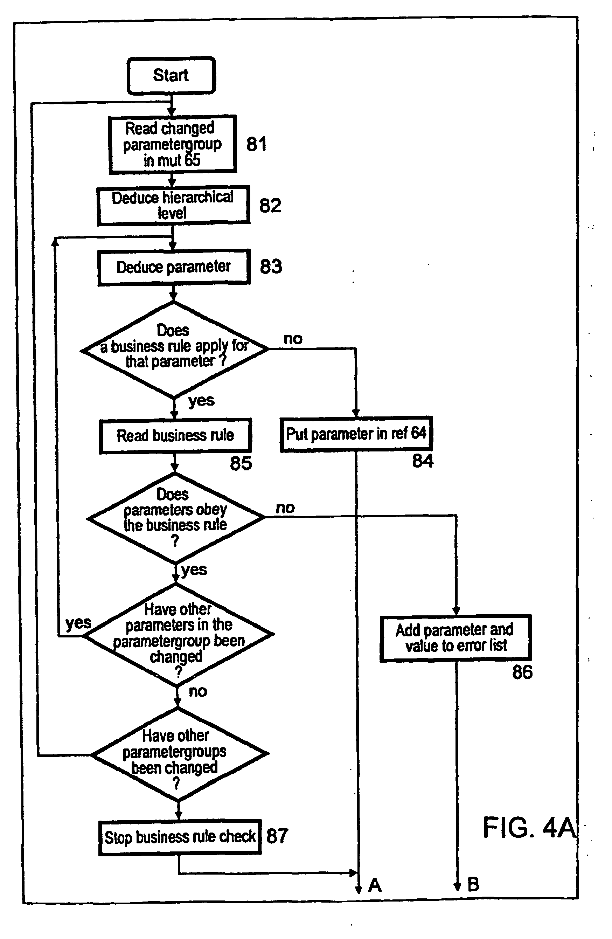

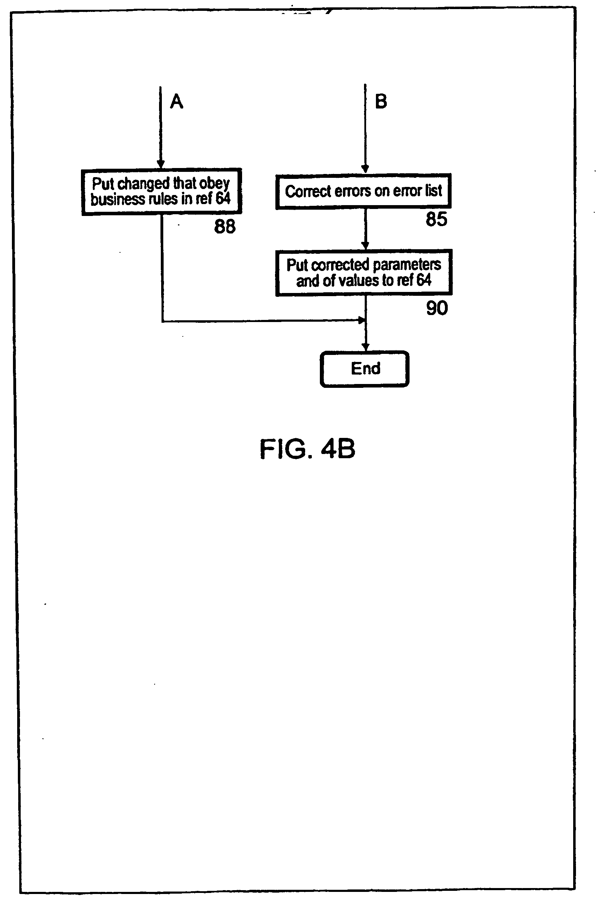

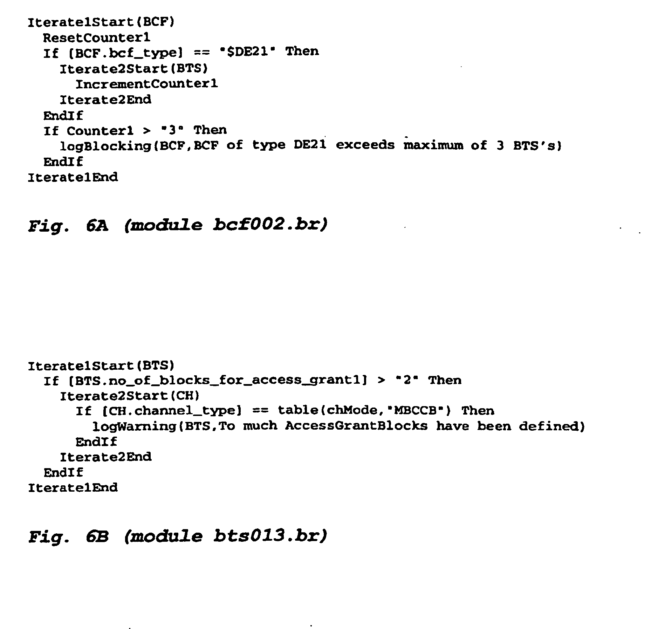

Figures 4A and 4B show a flow chart to illustrate schematically the application of business rules to parameter changes for the radio network 1 as proposed by the user 69. In the first step 81 a parameter group that is changed in mut 65 is read. Next the hierarchical level is determined from this parameter group at 82 and subsequently the parameter is found at 83. For this parameter it may be that no business rule has been defined or programmed. In that case 84 the parameter is put directly into the ref part 64 of database 62 and is ready to be implemented in the radio network 1. If a business rule does exist for the particular parameter that business rule is read at 85. It is checked whether the parameter does obey the business rule. If the parameter does not obey the business rule an error list is generated and the parameter and corresponding value are put on that list at 86. If the parameter does obey to the business rule defined or programmed for that parameter the next step is to find out whether other parameters have been changed that belong to the parameter group under consideration. These parameters may run through the same series of steps as described above. If all the changed parameters have been put to the business rule test as described above, it is determined whether other parameter groups have been changed as well. The same series of steps as described above may be applied to the parameters belonging to that parameter group. Finally if all the parameter groups have been checked, the business rule checker 70 stops at step 87. As a result of the business rule checking process the parameters that obey the business rules defined or programmed for them are put in the ref part 64 of the database 62 at step 88 and are ready to be implemented in the radio network 1. If the parameters or values do not obey the business rules the parameters and corresponding values appear on the generated error list and after finalisation of the business rule checking of all the parameter groups this error list is put to the user. The user then has to correct the parameters, as shown at step 89. The corrected parameters or values then can be put to the ref part 64 of database 62 as well. Now the complete set of parameters and corresponding values does obey the business rules and is ready to be implemented to the cellular radio network 1. Although in figures 4A an B only individual parameters are checked whether or not they obey a business rule, also relations of parameters can be checked on a business rule (see e.g. figure 6A as discussed below).

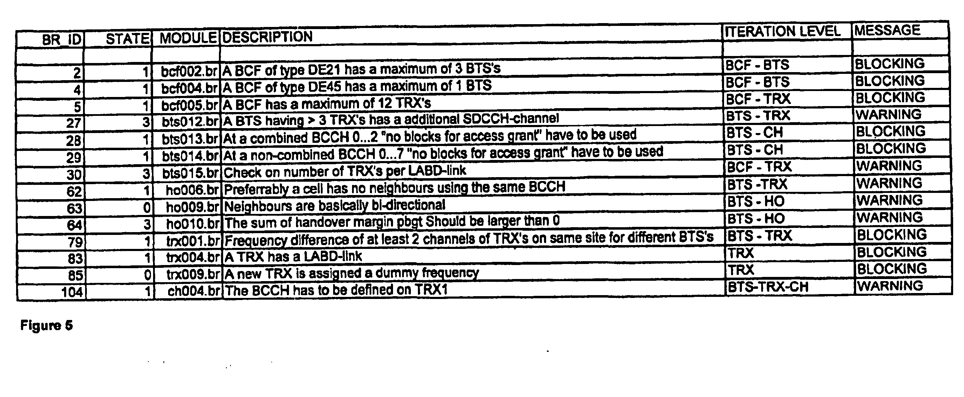

Figure 5 shows a table of business rules defined for a particular type of cellular radio network 1. It is stressed that an almost infinite amount of these kind of business rules can be defined so the rules shown in figure 5 only give a few examples. The table shown in figure 5 shows columns defining a business rule identification number BR_ID, the state of the business rule, the file name or module, the iteration level and the message to be shown when a parameter does not obey the business rule. Additional columns can include e.g. the priority level, author of the business rule, date of modification, version number, remarks etc.

The state of a business rule establishes whether that business rule is taken into consideration when the business rule checking is performed. It is not necessary that all the business rules have to be checked in a particular configuration or reconfiguration project with regard to the radio network. It may be up to the user to select the business rules he wants to apply. However it may be that some business rules have to be checked at all times and therefore can not be put aside by the user. Business rules can e.g. be applied by running a main script calling the separate business rule modules selected by the user or imposed by the system.

The iteration level relates to the hierarchical level of the elements of the cellular radio network to be checked. Generally, if the business rule is defined or programmed for another element at the same or a higher hierarchical level the iteration level will be higher than the highest of the hierarchical levels of all the elements involved for that specific business rule. An example of such a business rule is shown in figure 5 and 6B as module bts013.br. If the business rule is defined for the element internally the iteration level and the hierarchical level are the same. An example of such a business rule is shown in figure 5 and 6A as module bcf002.br.

The message relates to the messages shown to the user in the generated error list at 86 when a parameter or value does not obey the business rule applied to that parameter or value. These error messages are operator-programmable as well. Different error levels can be distinguished, such as a blocking message (i.e. a serious error indicating that the proposed change may not be implemented in the radio network under any circumstances) or a warning message (i.e. an error indicating that the proposed change is not desirable, but does not do harm to the operation of the cellular radio network if implemented). Other error levels can be used as well, like e.g. engineering messages indicating that the change to be implemented does not achieve the optimal result.

The description column of the table in figure 5 defines the business rule in human language. In figure 6 the contents of some of the files used for the business rule check are displayed.

Figures 6A-B show a few examples of business rule modules that are also mentioned in the table of figure 5. Figure 6A shows the script of the business rule module bcf002.br, which is a business rule of the administrative kind as mentioned previously. It checks whether the requirement that a BCF 29 of type DE21 has more than 3 BTS's 31 connected according to e.g. the Nokia hierarchy 12 of figure 2. If it does, a blocking message appears on the error list indicating to the user 69 that that particular BCF does have more than 3 BTS's.

Figure 6B shows the script of the business rule module bts013.br. It states that one Access Grant Block (AGB) is required for each Basic Communication Channel. A blocking message appears if the business rule is not obeyed.

It is explicitely stated that the examples and embodiments as described in this section do not limit the scope of the invention in any way. Modifications of the examples and embodiments fall within the scope of this application. E.g. it may be a advantageous to distribute the cellular radio network amongst several geographic regions each of these regions having an operator. Basically the same system of network management, including the business rule checker, can be applied in this situation. Measures can be taken to avoid conflicts when more than one user 69 tries to change the parameter settings in his region, especially around the borderlines of the respective regions. This possible conflict can be solved by allowing only one proposal to change the parameters. The system signals succeeding users trying to change the same parameters that an earlier proposal has already been made including the data of that particular user.

Another modification may be that proposals can be stored instead of being implemented immediately. This option is particularly relevant in the framework of more projects. Several projects can be identified, e.g. mass- updates involving future optimalisation of large numbers of parameters or the pre-integration of new network elements. More projects may be planned simultaneously based on the same set of data. In order to avoid conflicts between projects it is possible to establish a 'frozen state' for a limited period.

## Claims

1. Method for checking at least one modified parameter (BS_TX_PWR_MAX) and/or value obtained from changing at least one operational parameter and/or value of an at least one component of a radio network, **characterized in that** said checking is performed on the basis of at least one business rule comprising at least one operational requirement deduced from operational use of the radio network and deviating from technically sufficient parameter setting requirements.

2. Method according to claim 1 wherein the at least one modified parameter (BS_TX_PWR_MAX) and/or value is checked before implementation in the radio network (1) comprising the steps of
copying to a database (62) the at least one operational parameter and/or value from the radio network (1);
changing the at least one operational parameter and/or value to the at least one modified parameter (BS_TX_PWR_MAX) and/or value;
checking the at least one modified parameter (BS_TX_PWR_MAX) and/or value by verifying whether the at least one selected business rule comprising the at least one operational requirement has been obeyed.

3. Method according to claim 2 wherein a non-compliance signal is generated if the at least one modified parameter (BS_TX_PWR_MAX) does not obey the at least one operational requirement.

4. Method according to claims 2 or 3 in which the at least one operational parameter is stored in a first part (63) of the database (62) and the at least one modified parameter (BS_TX_PWR_MAX) is stored in a second part (65) of the database (62).

5. Method according to claim 4 in which the first and second part of the database (62) are separate databases.

6. Method according to any of the claims 2-5 in which at least one of the the at least one operational parameter or the at least one modified parameter (BS_TX_PWR_MAX) is stored in the database (62) using a compressed row technique.

7. Method according to any of the claims 2-5 in which the database (62) comprises at least one hierarchy table to store and have access to the at least one operational parameter and the at least one modified parameter (BS_TX_PWR_MAX).

8. Method according to claim 7 in which the at least one hierarchy table is used for checking whether the at least one modified parameter (BS_TX_PWR_MAX) obeys the at least one selected business rule.

9. Method according to any of the preceding claims in which the at least one modified parameter (BS_TX_PWR_MAX) relates to at least one level of a GSM or DCS network hierarchy.

10. Method according to claim 9 in which the levels of the GSM network hierarchy are mobile switching centre (MSC) (20), operational maintenance centre (OMC) (25), base station controller (BSC) (30), bearer control function (29) and/or base transceiver station (BTS) (31).

11. Method according to claim 9 or 10 in which the levels of the GSM network hierarchy are transceiver level (TRX) (37), hand-over (HO) (36) and/or channel level (CH) (38).

12. Method according to any of the claim 1-8 in which the at least one modified parameter (BS_TX_PWR_MAX) relates to at least one level of a GPRS hierarchy.

13. Method according to claim 12 in which the levels of the GPRS hierarchy are mobile switching centre (MSC) (20), operational maintenance centre (OMC) (25), base station controller (BSC) (30), serving GPRS support node (SGSN) (34), bearer control function (BCF) (29).

14. Method according to claim 13 in which the levels of the GPRS hierarchy are transceiver level (TRX) (37), hand-over (HO) (36) and/or channel level (CH) (38).

15. Method according any of the claims 9-14 in which the checking of the at least one modified parameter (BS_TX_PWR_MAX) and/or value by verifying whether the at least one selected business rule comprising at least one operational requirement has been obeyed is applied to at least one of the levels of the GSM, DCS or GPRS hierarchy.

16. Method according to any of claims 9-15 wherein relationships are checked between different operational and/or modified parameters in the same or different hierarchical levels of the radio network.

17. Method according to any of the preceding claims in which the at least one selected business rule is programmed by an operator or at least ordered or influenced by the operator (69) of the radio network (1).

18. Method according to any of the preceding claims in which the at least one operational requirement involves an administrative requirement.

19. Method according to claim 17 in which the operational requirement involves a technically preferable requirement programmed, ordered and/or influenced by the operator (69) of the radio network (1).

20. Method according to claim 3 in which the non-compliance signal is a file or message displayed to an operator.

21. Method according to claim 3 or 20 in which the non-compliance signal is programmable.

22. A system (60) for checking at least one modified parameter BS_TX_PWR_MAX) and/or value obtained from changing at least one operational parameter and/or value of at least one component of a radio network, **characterized in that** said system is adapted to perform said checking on the basis of at least one business rule comprising at least one operational requirement derived from operational use of the radio network and deviating from technically sufficient parameter setting requirements.

23. System (60) according to claim 22 for checking the at least one modified parameter (BS_TX_PWR_MAX) and/or value before implementation in the radio network (1), comprising:
a first part (63) of a database (62) to store the at least one operational parameter and/or value from the radio network
a second part (65) of a database (62) to store the at least one modified parameter and/or value;
a business rule checker (71) verifying whether the at least one modified parameter and/or value obeys the at least one operational requirement;

24. System (60) according to claim 23 wherein a signal genarator can generate a non-compliance signal if the at least one modified parameter (BS_TX_PWR_MAX) does not obey the at least one operational requirement.

25. System (60) according to claims 23 or 24 further comprising scripting means (72) in order to define business rules and/or error messages to be used by the business rule checker (71).

26. Computer program for running on a computer system comprising software code portions for checking at least one modified parameter (BS_TX_PWR_MAX) and/or value obtained from changing at least one operational parameter and/or value of an at least one component of a radio network **characterized in that** sand checking is perfomed on the basis of at least one business rule comprising at least one operational requirement derived from operational use of the radio network and deviating from technically sufficient parameter setting requirements.

27. Computer program according to claim 26, further comprising software code portions for checking the at least one modified parameter BS_TX_PWR_MAX and/or value before implementation in the radio network (1) comprising the steps of
copying to a database (62) the at least one operational parameter and/or value from the radio network (1);
changing the at least one operational parameter and/or value to the at least one modified parameter and/or value;
checking the at least one modified parameter and/or value by verifying whether the at least one selected business rule comprising the at least one operational requirement has been obeyed.

28. Computer program according to claim 26 or 27 wherein at least one of the the at least one operational parameter or the at least one modified parameter is stored in a database (62) using a compressed row technique.

## Patentansprüche

1. Verfahren zum Überprüfen von mindestens einem modifizierten Parameter (BS_TX_PWR_MAX) und/oder Wert, der vom Verändern von mindestens einem Arbeitsparameter und/oder Wert von mindestens einer Komponente eines Funknetzwerkes erhalten worden ist, **dadurch gekennzeichnet, dass** das besagte Überprüfen auf der Basis von mindestens einer Geschäftsregel durchgeführt wird, welche mindestens ein operationelles Erfordernis umfasst, welches von dem operationellen Einsatz des Funknetzwerk abgeleitet ist und von technisch ausreichenden Parametereinstellungserfordernissen abweicht.

2. Verfahren nach Anspruch 1, bei dem der mindestens eine modifizierte Parameter (BS_TX_PWR_MAX) und/oder Wert vor der Implementierung in den Funknetzwerken (1) überprüft wird, welches die Schritte umfasst:
- Kopieren in eine Datenbank (62) von dem mindestens einen operationellen Parameter und/oder Wert aus dem Funknetzwerk (1),
- Wechsel von dem mindestens einen operationellen Parameter und/oder Wert zu dem mindestens einen modifizierten Parameter (BS_TX_PWR_MAX) und/oder Wert,
- Überprüfen des mindestens einen modifizierten Parameters (BS_TX_PWR_MAX) und/oder Wert durch das Überprüfen, ob der mindestens einen ausgewählten Geschäftsregel, die das mindestens eine operationelle Erfordernis umfasst, gefolgt worden ist.

3. Verfahren nach Anspruch 2, bei dem ein Nichtübereinstimmungssignal erzeugt wird, falls der mindestens eine modifizierte Parameter (BS_TX_PWR_MAX) nicht dem mindestens einen operationellen Erfordernis gehorcht.

4. Verfahren nach Anspruch 2 oder 3, bei dem der mindestens eine operationelle Parameter in einem ersten Teil (63) der Datenbank (62) gespeichert wird und der mindestens eine modifizierte Parameter (BS_TX_PWR_MAX) in einem zweiten Teil (65) der Datenbank (62) gespeichert wird.

5. Verfahren nach Anspruch 4, bei dem der erste und der zweite Teil der Datenbank (62) getrennte Datenbanken sind.

6. Verfahren nach einem der Ansprüche 2 bis 5, bei dem mindestens einer der mindestens eine operationelle Parameter oder der mindestens eine modifizierte Parameter (BS_TX_PWR_MAX) in der Datenbank (62) unter Einsatz einer komprimierten Zeilentechnik gespeichert wird.

7. Verfahren einem der Ansprüche 2 bis 5, bei dem die Datenbank (62) mindestens eine Hierarchietabelle umfasst, um den mindestens einen operationellen Parameter zu speichern und zu dem mindestens einen operationellen Parameter und dem mindestens einen modifizierten Parameter (BS_TX_PWR_MAX) Zugang zu haben.

8. Verfahren nach Anspruch 7, bei dem die mindestens eine Hierarchietabelle eingesetzt wird, um zu überprüfen, ob der mindestens eine modifizierte Parameter (BS_TX_PWR_MAX) der mindestens einen ausgewählten Geschäftsregel gehorcht.

9. Verfahren nach einem der vorstehenden Ansprüche, bei dem der mindestens modifizierte Parameter (BS_TX_PWR_MAX) sich auf mindestens ein Niveau einer GSM oder DCS-Netzwerkhierarchie bezieht.

10. Verfahren nach Anspruch 9, bei dem die Niveaus der Hierarchie des GSM-Netzwerkes sind: Mobile Vermittlungsstelle (MSC) (20), operationelle Verwaltungsstelle (OMC) (25), Basisstationssteuerung (BSC) (30), Haltersteuerfunktion (29) und) (oder Basisübertragerstation (BTS) (34).

11. Verfahren nach Anspruch 9 oder 10, bei dem die Niveaus der Hierarchie des GSM Netzwerkes sind: Übertragerniveau (TRX) (37), Übergabe (HO) (36) und) (oder Kanalniveau (CH) (38).

12. Verfahren nach einem der vorstehenden Ansprüche 1 bis 8, bei dem der mindestens eine modifizierte Parameter (BS_TX_PWR_MAX) sich auf mindestens ein Niveau einer GPRS-Hierarchie bezieht.

13. Verfahren nach Anspruch 12, bei dem die Niveaus der GPRS-Hierarchie sind: mobile Vermittlungsstelle (MSC) (20), operationelle Verwaltungszentrum (OMC) (25), Basisstationssteuerung (BSC) (30), unterstützender GPRS-Unterstützungsknoten (SGSN) (34), Haltersteuerfunktion (BCF) (29) und) (oder Basisübertragerstation (BTS) (31).

14. Verfahren nach Anspruch 13, bei dem die Niveaus der GPRS-Hierarchie sind: Übertragerniveau (TRX) (37), Übergabe (HO) (36) und) (oder Kanalniveau (CH) (38).

15. Verfahren nach einem der Ansprüche 9 bis 14, bei dem das Überprüfen von dem mindestens einem modifizierten Parameter (BS_TX_PWR_MAX) und/oder Wert durch das Verifizieren stattfindet, ob der mindestens einen ausgewählten Geschäftsregel, die mindestens ein operationelles Erfordernis umfasst, gefolgt worden ist, auf mindestens eines der Niveaus der GSM-, DCS- oder GPRS-Hierarchie angewandt wird.

16. Verfahren nach einem der Ansprüche 9 bis 15, bei dem die Verhältnisse zwischen verschiedenen operationellen und/oder modifizierten Parametern in dem selben oder unterschiedlichen hierarchischen Niveaus des Funknetzwerks überprüft werden.

17. Verfahren nach einem der vorstehenden Ansprüche, bei dem die mindestens eine ausgewählte Geschäftsregel durch einen Betreiber programmiert wird oder mindestens beauftragt oder beeinflusst wird durch den Betreiber (69) des Funknetzwerks (1).

18. Verfahren nach einem der vorstehenden Ansprüche, bei dem das mindestens eine operationelle Erfordernis ein Verwaltungserfordernis umfasst.

19. Verfahren nach Anspruch 17, bei dem das operationelle Erfordernis ein technisch bevorzugtes Erfordernis umfasst, welches programmiert, beauftragt und/oder beeinflusst ist durch den Betreiber (69) des Funknetzwerkes (1).

20. Verfahren nach Anspruch 3, bei dem das Nichtübereinstimmungssignal eine Datei oder eine Nachricht ist, die einem Betreiber angezeigt wird.

21. Verfahren nach Anspruch 3 oder 20, bei dem das Nichtübereinstimmungssignal programmierbar ist.

22. Ein System (60) zum Überprüfen von mindestens einem modifizierten Parameter (BS_TX_PWR_MAX) und/oder Wert, der durch das Ändern von mindestens einem operationellen Parameter und/oder Wert von mindestens einer Komponente eines Funknetzwerkes erhalten wird, **dadurch gekennzeichnet, dass** das besagte System angepasst ist, um das Prüfen auf der Basis von mindestens einer Geschäftsregel auszuführen, die mindestens ein operationelles Erfordernis umfasst, welches von dem operativen Einsatz des Funknetzwerkes abgeleitet wird und von technisch ausreichenden Parametereinstellungserfordernissen abweicht.

23. System (66) nach Anspruch 22 zum Überprüfen von dem mindestens einen modifizierten Parameter (BS_TX_PWR_MAX) und/oder Wert vor der Implementierung in dem Funknetzwerk (1), umfassend:
- einen ersten Teil (63) einer Datenbank (62), um den mindestens einen operationellen Parameter und/oder Wert aus dem Funknetzwerk zu speichern,
- einen zweiten Teil (65) einer Datenbank (62), um den mindestens einen modifizierten Parameter und/oder Wert zu speichern, und
- einen Geschäftsregelüberprüfer (71), der überprüft, ob der mindestens eine modifizierte Parameter und/oder Wert dem mindestens einen operationellen Erfordernis gehorcht.

24. System (60) nach Anspruch 23, bei dem ein Signalgenerator ein Nichtübereinstimmungssignal erzeugen kann, falls der mindestens eine modifizierte Parameter (BS_TX_PWR_MAX) nicht dem mindestens einen operativen Erfordernis gehorcht.

25. System (60) nach Anspruch 23 oder 24, weiterhin umfassend skripterzeugende Mittel (72), um Geschäftsregeln und/oder Fehlermeldungen zu definieren, die durch den Geschäftsregelüberprüfer (71) einzusetzen sind.

26. Computerprogramm zum Ausführen auf einem Computersystem mit Softwarecodeabschnitten zum Überprüfen von mindestens einem modifizierten Parameter (BS_TX_PWR_MAX) und/oder Wert, der durch das Ändern von mindestens einem operationellen Parameter und/oder Wert von einer der mindestens einen Komponente eines Funknetzwerks erhalten wird, **dadurch gekennzeichnet, dass** das besagte Überprüfen auf der Basis von mindestens einer Geschäftsregel durchgeführt wird, die mindestens ein operationelles Erfordernis umfasst, welches von dem operationellen Einsatz des Funknetzwerkes abgeleitet wird und von den technisch ausreichenden Parametereinstellungserfordernissen abweicht.

27. Computerprogramm nach Anspruch 26, weiterhin umfassend Softwarecodeabschnitte zum Überprüfen von dem mindestens einem modifizierten Parameter (BS_TX_PWR_MAX) und/oder Wert vor der Implementierung in dem Funknetzwerk (1), umfassend die Schritte des
- Kopierens zu einer Datenbank (62) von dem mindestens einem operationellen Parameter und/oder Wert des Funknetzwerkes (1),
- Abändern von dem mindestens einem operationellen Parameter und/oder Wert zu dem mindestens einem modifizierten Parameter und/oder Wert, und
- Überprüfen des mindestens einen modifizierten Parameters und/oder Wertes durch Verifizieren, ob die mindestens eine ausgewählte Geschäftsregel, die das mindestens eine operationelle Erfordernis umfasst, gefolgt wird.

28. Computerprogramm nach Anspruch 26 oder 27, bei dem mindestens einer der mindestens einer operationellen Parameter oder der mindestens eine modifizierte Parameter in einer Datenbank (62) unter Einsatz einer komprimierten Zeilentechnik gespeichert wird.

## Revendications

1. Procédé destiné à vérifier au moins un paramètre (BS_TX_PWR_MAX) et/ou une valeur modifiés obtenus en changeant au moins un paramètre et/ou une valeur opérationnels d'au moins un composant d'un réseau radio, **caractérisé en ce que** ladite vérification est réalisée sur la base d'au moins une règle métier comprenant au moins une exigence opérationnelle déduite de l'utilisation opérationnelle du réseau radio et différant des exigences de réglage de paramètre techniquement suffisantes.

2. Procédé selon la revendication 1 dans lequel l'au moins un paramètre (BS_TX_PWR_MAX) et/ou une valeur modifiés sont vérifiés avant la mise en oeuvre dans le réseau radio (1) comprenant les étapes consistant à :
copier dans une base de données (62) l'au moins un paramètre et/ou une valeur opérationnels provenant du réseau radio (1) ;
changer l'au moins un paramètre et/ou une valeur opérationnels en l'au moins un paramètre (BS_TX_PWR_MAX) et/ou une valeur modifiés ;
vérifier l'au moins un paramètre (BS_TX_PWR MAX) et/ou une valeur modifiés en vérifiant si l'au moins une règle métier sélectionnée comprenant l'au moins une exigence opérationnelle a été respectée.

3. Procédé selon la revendication 2 dans lequel un signal de non-conformité est généré si l'au moins un paramètre modifié (BS_TX_PWR_MAX) ne respecte pas l'au moins une exigence opérationnelle.

4. Procédé selon les revendications 2 ou 3 dans lequel l'au moins un paramètre opérationnel est stocké dans une première partie (63) de la base de données (62) et l'au moins un paramètre modifié (BS_TX_PWR_MAX) est stocké dans une seconde partie (65) de la base de données (62).

5. Procédé selon la revendication 4 dans lequel la première et la seconde partie de la base de données (62) sont des bases de données séparées.

6. Procédé selon l'une quelconque des revendications 2 à 5 dans lequel au moins l'un de l'au moins un paramètre opérationnel ou l'au moins un paramètre modifié (BS_TX_PWR_MAX) est stocké dans la base de données (62) en utilisant une technique à rangées comprimées.

7. Procédé selon l'une quelconque des revendications 2 à 5 dans lequel la base de données (62) comprend au moins un tableau de hiérarchie pour stocker et avoir accès à l'au moins un paramètre opérationnel et l'au moins un paramètre modifié (BS_TX_PWR_MAX).

8. Procédé selon la revendication 7 dans lequel l'au moins un tableau de hiérarchie est utilisé pour vérifier si l'au moins un paramètre modifié (BS_TX_PWR_MAX) respecte l'au moins une règle métier sélectionnée.

9. Procédé selon l'une quelconque des revendications précédentes dans lequel l'au moins un paramètre modifié (BS_TX_PWR MAX) concerne au moins un niveau d'une hiérarchie de réseau GSM ou DCS.

10. Procédé selon la revendication 9 dans lequel les niveaux de la hiérarchie de réseau GSM sont le commutateur de service mobile (MSC) (20), le centre d'exploitation et de maintenance (OMC) (25), le contrôleur de station de base (BSC) (30), la fonction de commande de support (29) et/ou la station de base (BTS) (31).

11. Procédé selon la revendication 9 ou 10 dans lequel les niveaux de la hiérarchie de réseau GSM sont le niveau de l'émetteur-récepteur (TRX) (37), le transfert intercellulaire (HO) (36) et/ou le niveau de canal (CH) (38).

12. Procédé selon l'une quelconque des revendications 1 à 8 dans lequel l'au moins un paramètre modifié (BS_TX_PWR_MAX) concerne au moins un niveau d'une hiérarchie GPRS.

13. Procédé selon la revendication 12 dans lequel les niveaux de la hiérarchie GPRS sont le commutateur de service mobile (MSC) (20), le centre d'exploitation et de maintenance (OMC) (25), le contrôleur de station de base (BSC) (30), le noeud de support GPRS de service (SGSN) (34), la fonction de commande de support (29).

14. Procédé selon la revendication 13 dans lequel les niveaux de la hiérarchie GPRS sont le niveau de l'émetteur-récepteur (TRX) (37), le transfert intercellulaire (HO) (36) et/ou le niveau de canal (CH) (38).

15. Procédé selon l'une quelconque des revendications 9 -14 dans lequel la vérification de l'au moins un paramètre (BS_TX_PWR_MAX) et/ou une valeur modifiés en vérifiant si l'au moins une règle métier sélectionnée comprenant l'au moins une exigence opérationnelle a été respectée est appliquée à au moins l'un des niveaux de la hiérarchie GSM, DCS ou GPRS.

16. Procédé selon l'une quelconque des revendications 9-15 dans lequel les relations sont vérifiées entre différents paramètres opérationnels et/ou modifiés dans le même niveau de hiérarchie ou des niveaux de hiérarchie différents du réseau radio.

17. Procédé selon l'une quelconque des revendications précédentes dans lequel l'au moins une règle métier sélectionnée est programmée par un opérateur ou au moins commandée ou influencée par l'opérateur (69) du réseau radio (1).

18. Procédé selon l'une quelconque des revendications précédentes dans lequel l'au moins une exigence opérationnelle implique une exigence administrative.

19. Procédé selon la revendication 17 dans lequel l'exigence opérationnelle implique une exigence techniquement préférable programmée, commandée et/ou influencée par l'opérateur (69) du réseau radio (1).

20. Procédé selon la revendication 3 dans lequel le signal de non-conformité est un fichier ou un message affiché pour l'opérateur.

21. Procédé selon la revendication 3 ou 20 dans lequel le signal de non-conformité est programmable.

22. Système (60) destiné à vérifier au moins un paramètre (BS_TX_PWR_MAX) et/ou une valeur modifiés obtenus en changeant au moins un paramètre et/ou une valeur opérationnels d'au moins un composant d'un réseau radio, **caractérisé en ce que** ledit système est adapté pour réaliser ladite vérification sur la base d'au moins une règle métier comprenant au moins une exigence opérationnelle dérivant de l'utilisation opérationnelle du réseau radio et différant des exigences de réglage de paramètre techniquement suffisantes.

23. Système (60) selon la revendication 22 destiné à vérifier l'au moins un paramètre (BS_TX_PWR_MAX) et/ou une valeur modifiés avant la mise en oeuvre dans le réseau radio (1), comprenant :
une première partie (63) d'une base de données (62) pour stocker l'au moins un paramètre et/ou une valeur opérationnels provenant du réseau radio ;
une seconde partie (65) d'une base de données (62) pour stocker l'au moins un paramètre et/ou une valeur modifiés ;
un vérificateur de règle métier (71) qui vérifie si l'au moins un paramètre et/ou une valeur modifiés respecte l'au moins une exigence opérationnelle.

24. Système (60) selon la revendication 23 dans lequel un générateur de signaux peut générer un signal de non-conformité si l'au moins un paramètre modifié (BS_TX_PWR_MAX) ne respecte pas l'au moins une exigence opérationnelle.

25. Système (60) selon les revendications 23 ou 24 comprenant en outre un moyen de script (72) afin de définir les règles métier et/ou les messages d'erreur à utiliser par le vérificateur de règle métier (71).

26. Programme informatique destiné à fonctionner sur un système informatique comprenant des parties de code logiciel destinées à vérifier à vérifier au moins un paramètre (BS_TX_PWR_MAX) et/ou une valeur modifiés obtenus en changeant au moins un paramètre et/ou une valeur opérationnels d'au moins un composant d'un réseau radio, **caractérisé en ce que** ladite vérification est réalisée sur la base d'au moins une règle métier comprenant au moins une exigence opérationnelle dérivant de l'utilisation opérationnelle du réseau radio et provenant d'exigences de réglage de paramètre techniquement suffisantes.

27. Programme informatique selon la revendication 26, comprenant en outre des parties de code logiciel destinées à vérifier l'au moins un paramètre (BS_TX_PWR_MAX) et/ou une valeur modifiés avant la mise en oeuvre dans le réseau radio (1) comprenant les étapes consistant à :
copier dans une base de données (62) l'au moins un paramètre et/ou une valeur opérationnels provenant du réseau radio (1) ;
changer l'au moins un paramètre et/ou une valeur opérationnels en l'au moins un paramètre et/ou une valeur modifiés ;
vérifier l'au moins un paramètre et/ou une valeur modifiés en vérifiant si l'au moins une règle métier sélectionnée comprenant l'au moins une exigence opérationnelle a été respectée.

28. Programme informatique selon la revendication 26 ou 27 dans lequel au moins l'un de l'au moins un paramètre opérationnel ou l'au moins un paramètre modifié est stocké dans une base de données (62) en utilisant une technique à rangées comprimées.
